# EUROPÄISCHE PATENTSCHRIFT

(11) **EP 2 042 024 B1**
(45) Veröffentlichungstag und Bekanntmachung des Hinweises auf die Patenterteilung: **06.04.2011**
(21) Anmeldenummer: 08016592.1
(22) Anmeldetag: 20.09.2008
(51) Int. Cl.: A01D 75/00, A01B 73/00

(54) **Schneidwerkswagen**
Harvesting car
Chariot pour un mécanisme de coupe

(30) Priorität: 26.09.2007 DE 102007046184
(43) Veröffentlichungstag der Anmeldung: 01.04.2009
(73) Patentinhaber: CLAAS Selbstfahrende Erntemaschinen GmbH, 33428 Harsewinkel (DE)
(72) Erfinder: Göblyös, Attila, 5200 Töröszentmiklós (HU); Nübel, Thomas, 37688 Beverungen (DE)
(74) Vertreter: Heuer, Wilhelm

(56) Entgegenhaltungen:
- EP-A- 0 045 039
- US-A- 3 413 014
- US-B1- 6 272 824
- US-B1- 6 428 047

## Beschreibung

Die vorliegende Erfindung betrifft einen Schneidwerkswagen zum Transport eines Schneidwerks für einen Mähdrescher. Die Schneidwerke moderner Mähdrescher haben meist eine Breite von vielen Metern, so dass ein Mähdrescher mit montiertem Schneidwerk zu breit ist, um öffentliche Straßen zu benutzen. Es wird daher ein Schneidwerkswagen benötigt, um das Schneidwerk getrennt vom Mähdrescher auf öffentlichen Straßen zu befördern.

Aus DD 301 470 A7 ist ein Schneidwerkswagen mit einem Fahrgestell und einem auf dem Fahrgestell montierten Auflagesattel bekannt, der geformt ist, um ein darauf platziertes Schneidwerk während des Transports stabil zu unterstützen. Die Gestalt des Auflagesattels ist an den Typ des zu transportierenden Schneidwerks angepasst. Um ein Schneidwerk eines zweiten Typs transportieren zu können, wird die Verwendung einer Zusatzauflage vorgeschlagen, die auf dem Auflagesattel platzierbar ist und an die Gestalt des zweiten Typs von Schneidwerk angepasst ist, um letzteres stabil zu unterstützen. Zwar ermöglicht ein solcher Wagen den Transport unterschiedlicher Typen von Schneidwerken, doch ist für jeden zusätzlichen Typ eine spezifische Zwischenauflage erforderlich. Jeder Typ von Schneidwerk kann nur in einer einzigen, fest vorgegebenen Orientierung transportiert werden.

EP 0 045 039 B1 offenbart einen Schneidwerkswagen, bei dem ein Auflagesattel aus mehreren gegeneinander bewegbaren Komponenten zusammengesetzt ist. So umfasst der Auflagesattel auf einer Seite mehrere Tragschienen, die zwischen unterschiedlichen Positionen schwenkbar sind, in denen Schneidwerke unterschiedlicher Typen je nach Typ von der einen, der anderen oder beiden Tragschienen unterstützt sind, und auf einer anderen Seite ein Aufnahmeteil mit einer nach oben offenen gabelförmigen Fangausnehmung, die angehoben werden kann, um eine Querstange des Schneidwerks zu unterstützen, oder abgesenkt werden kann, um die Platzierung eines Hinterteils des Schneidwerks in einer zu der Fangausnehmung benachbarten Tragtasche zu ermöglichen. Ein solcher Schneidwerkswagen benötigt zwar keine Zwischenauflage, um unterschiedliche Typen von Schneidwerken befördern zu können, doch ist durch die Konstruktion des Wagens von Anfang an fest vorgegeben, welche Typen von Schneidwerken befördert werden können. Außerdem kann jeder Typ von Schneidwerk nur in einer fest vorgegeben Orientierung in Bezug auf den Wagen aufgenommen werden. Eine Verstellung der beweglichen Komponenten des Auflagesattels im beladenen Zustand ist ausgeschlossen.

US 4 834 598 offenbart einen Schneidwerkswagen, bei dem auf einem Querträger des Fahrwerks auf einer Seite ein horizontal verstellbarer Anschlag und auf der anderen ein Arm angebracht ist, der vertikal und transversal einstellbar ist, um unterschiedliche Typen von Schneidwerken unterstützen zu können. Auch hier existiert in der Regel für jeden Typ von Schneidwerk nur eine Stellung des Arms, in der das Schneidwerk stabil unterstützt ist, und die Lage des Schneidwerks in Bezug auf das Fahrgestell ist fest vorgegeben.

Alle diese bekannten Schneidwerkswagen können zwar in ihrer Gestalt so angepasst werden, dass ein bestimmter Mähdrescher ein ihm zugeordnetes Schneidwerk in sicherer Lagerstellung darauf absetzen und von dem Wagen wieder aufnehmen kann. Sie berücksichtigen jedoch nicht, dass Betreiber, die mehrere Mähdrescher im Einsatz haben, ein gleiches Schneidwerk mitunter an verschiedenen Mähdreschern unterschiedlicher Typen verwenden wollen. Dabei ergibt sich das Problem, dass die Einzugskanäle der Mähdrescher, an denen die Schneidwerke jeweils montiert werden müssen, bei verschiedenen Typen unterschiedliche Orientierungen haben können. Dementsprechend können sich auch die Orientierungen unterscheiden, in denen die verschiedenen Mähdreschertypen ein gleiches Schneidwerk auf einem Transportwagen sanft absetzen oder von diesem aufnehmen können.

Weitere Probleme können sich - ungeachtet der oben erwähnten eventuell unterschiedlichen Orientierungen der Einzugskanäle - dadurch ergeben, dass die Einzugskanäle zum Montieren eines Schneidwerks in einen Zwischenraum zwischen Wagenrad und Schneidwerk eingeführt werden müssen und dass der Platzbedarf des Einzugskanals in diesem Zwischenraum je nach Modell unterschiedlich sein kann. Im Allgemeinen ist man bestrebt, den Schwerpunkt des Schneidwerks auf dem Wagen möglichst tief und möglichst genau auf einer Längsmittelebene des Wagens zu platzieren, um eine stabile Lagerung des Schneidwerks und ein gutes Fahrverhalten des Wagens zu erzielen. Soll gleichzeitig noch der Einführzwischenraum für den Einzugkanal möglichst geräumig gemacht werden, so muss man hinsichtlich der Schwerpunktslage Abstriche in Kauf nehmen. Ein weiteres Problem ergibt sich dadurch, dass der seitliche Überstand, den das Schneidwerk über den Rand des Wagens haben darf, gesetzlichen Einschränkungen unterliegt, Wenn das Schneidwerk außermittig platziert wird, um den Zwischenraum für den Einzugskanal breit zu machen, so kann dies dazu führen, dass die vom Einzugskanal abgewandte Seite des Schneidwerks unzulässig weit übersteht.

Ein Schneidwerkswagen nach dem Oberbegriff des Anspruchs 1, der das Aufnehmen bzw. Absetzen eines gleichen Schneidwerks in unterschiedlichen Stellungen bzw. Orientierungen gestattet, ist aus US 3 413 014 und aus US 6 428 047 B1 bekannt. In beiden Schriften verläuft eine Schwenkachse unterhalb des Auflagesattels.

Aufgabe der vorliegenden Erfindung ist, einen Schneidwerkswagen zu schaffen, der unabhängig von der Orientierung des Schneidwerks auf dem Wagen eine gute Fahrbarkeit aufweist.

Die Aufgabe wird gelöst durch einen Schneidwerkswagen mit den Merkmalen des Anspruchs 1.

Generell ist die Abhängigkeit der Schwerpunktsposition von der Stellung des Auflagesattels um so geringer, je näher die Schwenkachse am Schwerpunkt liegt. Erfindungsgemäß sollte die Entfernung der Schwenkachse vom Schwerpunkt eines auf den Auflagesattels geladenen Schneidwerks kleiner als ein Drittel der Entfernung zwischen einem Auflagepunkt des Schneidwerks auf dem Auflagesattel und dem Schwerpunkt des Schneidwerks sein.

Im einfachsten Fall ermöglicht ein solcher Schneidwerkswagen eine Anpassung der Stellung des Auflagesattels an die Orientierung, in der ein Mähdrescher das Schneidwerk auf dem Sattel abzusetzen vermag, so dass das Schneidwerk in derselben Orientierung, in der es vom Mähdrescher gehalten wird, auch von dem Auflagesattel unterstützt wird. Ein unkontrolliertes Kippen des Schneidwerks, zu dem es herkömmlicher Weise insbesondere dann kommen könnte, wenn das Schneidwerk vom Mähdrescher in einer Stellung abgekoppelt werden muss, in der es zwar den Auflagesattel berührt und nicht weiter abgesenkt werden kann, auf diesem aber noch keine stabile Lage erreicht hat, kann so vermieden werden. Wenn darüber hinaus der Auflagesattel auch im mit dem Schneidwerk beladenen Zustand schwenkend bewegbar ist, kann darüber hinaus die Orientierung des auf dem Schneidwerkswagen ruhenden Schneidwerks an einen Mähdrescher, an dem es angekoppelt werden soll, angepasst werden, was die Anbringung des Schneidwerks an dem Mähdrescher vereinfacht und sicherer macht.

Der Auflagesattel ist vorzugsweise in sich starr und nur als Ganzes in Bezug auf das Fahrgestell bewegbar.

Der Auflagesattel kann insbesondere wenigstens zwei in Fahrtrichtung des Wagens beabstandete und durch sich in Fahrtrichtung erstreckende Streben verbundene Auflagekufen umfassen.

Um den Auflagesattel schwenkend bewegbar zu führen, kann von Auflagesattel und Fahrgestell jeweils eines wenigstens eine Führungskontur, insbesondere ein Langloch, und das andere einen entlang der Führungskontur quer zur Fahrtrichtung verschiebbaren Kontaktkörper, vorzugsweise einen in das Langloch eingreifenden Bolzen, aufweisen.

Um eine Verstellung des Auflagesattels anzutreiben kann ein parallel zu der Führungskontur wirkendes, einerseits an dem Fahrgestell und andererseits an dem Auflagesattel angreifendes Stellglied vorgesehen sein.

Einer ersten bevorzugten Ausgestaltung zufolge ist der Auflagesattel mittels zweier Führungskonturen und daran entlang beweglicher Kontaktkörper geführt, wobei eine erste der Führungskonturen zu einer Längsmittelebene des Fahrzeugs hin abschüssig ist und die zweite Führungskontur sich unter einem kleineren Winkel zur Horizontalen erstreckt als die erste. Die unterschiedliche Orientierung der Führungskonturen gewährleistet, dass der Auflagensattel, wenn er entlang der Führungskonturen verschoben wird, eine Kippbewegung ausführt. Zweckmäßigerweise wird die an dem Mähdrescher zu befestigende Seite eines Schneidwerks benachbart zu der zweiten Führungskontur auf den Auflagesattel platziert, so dass die Höhe, in der das Schneidwerk auf dem Auflagesattel abgesetzt bzw. von ihm abgehoben werden kann, wenig von der Stellung des Auflagesattels in Bezug zum Fahrgestell abhängt.

Einer zweiten bevorzugten Ausgestaltung zufolge ist die schwenkende Bewegung des Auflagesattels mit Hilfe wenigstens eines Kipphebels geführt, der gelenkig mit dem Auflagesattel und dem Fahrgestell verbunden ist. Dieser Kipphebel ist vorzugsweise zu einer Längsmittelebene des Fahrzeugs hin ansteigend orientiert.

Einer weiteren Ausgestaltung zufolge können Auflagesattel und Fahrgestell auch durch einen Kniehebel verbunden sein, an dessen Knie ein Stellglied angreift.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine Vorderansicht eines Schneidwerkswagens gemäß einer ersten Ausgestaltung der Erfindung mit einem darauf geladenen, schematisch dargestellten Schneidwerk;
- Fig. 2: eine Draufsicht auf den Schneidwerkswagen der Fig. 1;
- Fig. 3: eine zu Fig. 1 analoge Vorderansicht gemäß einer zweiten Ausgestaltung; und
- Fig. 4: eine Vorderansicht gemäß einer dritten Ausgestaltung.

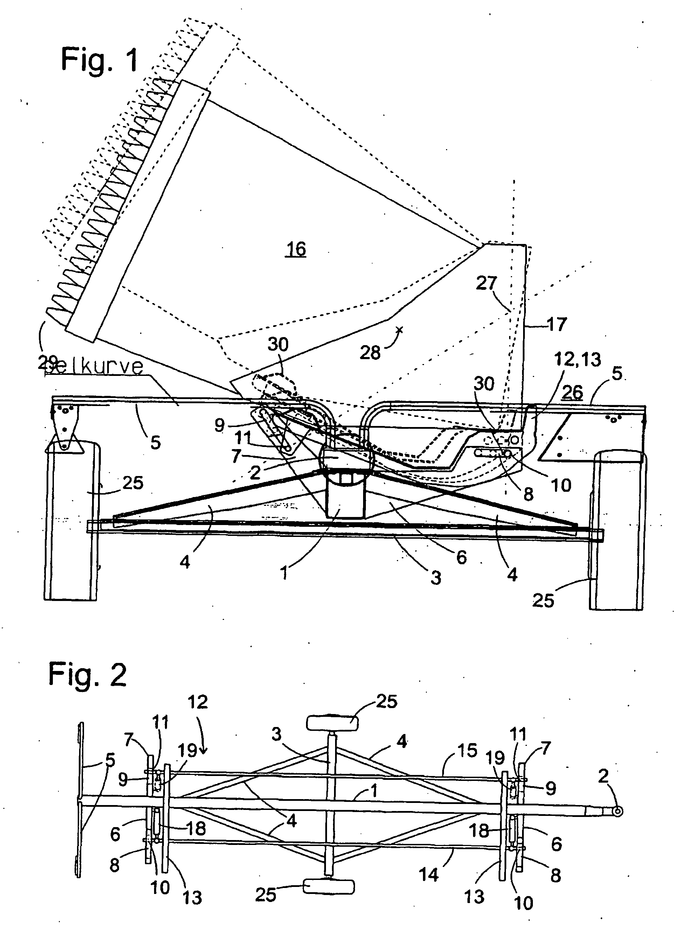

Der in Fig. 1 und 2 dargestellte Schneidwerkswagen hat ein Fahrgestell mit einem Längsträger 1, der an einem vorderen Ende aufwärts gekröpft ist und in eine Kupplung 2 zum Anschließen an eine Zugmaschine ausläuft. Die Zugmaschine kann insbesondere der Mähdrescher selbst sein, der ein auf dem Schneidwerkswagen befördertes Schneidwerk benutzen soll.

Der Längsträger 1 ist mittig von einer Achse 3 mit Rädern 25 unterstützt. Diagonalstreben 4 verbinden den Längsträger 1 und die Achse 3 zu einem starren Rahmen. Aufgrund der mittigen Anordnung der Achse 3 muss der Einzugkanal eines Mähdreschers, um an das Schneidwerk anzudocken, über die Höhe der Räder 25 angehoben werden, und ein Zwischenraum 26 zwischen dem rechten Rad 25 und dem Schneidwerk muss geräumig genug für den Einzugskanal sein.

Von einem rückwärtigen Ende des Längsträgers 1 abstehende Arme 5 tragen Rückstrahler oder Leuchten, Kennzeichen und gegebenenfalls Warnschilder.

Von dem Längsträger 1 stehen jeweils vorne und hinten zwei Arme 6, 7 ab, von denen einer, mit 6 bezeichnet, im Wesentlichen horizontal ausgerichtet und mit einem horizontalen Langloch 8 versehen ist, während der andere, vom Längsträger 1 aus steiler ansteigende, kürzere Arm 7 ein nach außen hin ansteigendes Langloch 9 aufweist. Wie insbesondere in Fig. 2 zu erkennen, erstrecken sich durch die Langlöcher 8, 9 jeweils Führungszapfen 10, 11 eines Auflagesattels 12, der vorgesehen ist, um darauf ein Schneidwerk stabil zu platzieren. Der Auflagesattel 12 besteht im vorliegenden Fall aus zwei quer zur Fahrtrichtung bzw. parallel zu den Armen 5, 6 ausgerichteten Auflagekufen 13 von plattenartiger Gestalt, deren oberer Rand an die Gestalt des zu befördernden Schneidwerks angepasst ist, um das Schneidwerk an wenigstens zwei möglichst weit auseinander liegenden Punkten 30 zu unterstützen und so diesem eine lagestabile Unterstützung zu bieten. Die zwei Auflagekufen 13 sind starr miteinander verbunden, im hier betrachteten Fall durch zwei Stangen 14, 15, deren Enden gleichzeitig die Führungszapfen 10, 11 sind. Darüber hinaus können natürlich mehr als zwei Auflagekufen 13 sowie weitere, insbesondere diagonal ausgerichtete Streben zwischen den Auflagekufen 13 vorgesehen sein.

Die Führungszapfen 10, 11 sind in den Langlöchern 8, 9 verschiebbar, so dass der Auflagesattel 12 und mit ihm ein darauf gelagertes Schneidwerk 16 unterschiedliche Stellungen annehmen kann. Zwei dieser Stellungen des Auflagesattels 12 und des Schneidwerks 16, die jeweils Anschlagstellungen der Führungszapfen 10, 11 an den Enden der Langlöcher 8, 9 entsprechen, sind in Fig. 1 jeweils mit durchgezogenen bzw. gestrichelten Linien dargestellt. Eine momentane Schwenkachse 27 des Auflagesattels bzw. des darauf ruhenden Schneidwerks ist jeweils definiert durch den Schnittpunkt zweier am Ort der Führungszapfen 10, 11 auf den Langlöchern 8, 9 senkrecht stehender, in Fig. 1 für die durchgezogen gezeichnete Stellung als strichpunktierte Linien eingezeichneter Geraden. Die Orientierung des Langlochs 9 ist so festgelegt, dass die Höhe der momentanen Schwenkachse 27 zwischen derjenigen der Unterkante 28 einer vom Mähdrescher abgewandten Seite des Schneidwerks in den beiden gezeigten Stellungen ist. Dies hat zur Folge, dass die Unterkante 28 sich zwischen den gezeigten Stellungen im Wesentlichen nur vertikal bewegt und der Überstand des Schneidwerks über das linke Rad 25 von der Orientierung des Auflagesattels 12 unabhängig ist.

Da eine am Mähdrescher zu befestigende Seite 17 des Schneidwerks 16 oberhalb der horizontalen Langlöcher 8 auf dem Auflagesattel 12 ruht, ist die Höhe dieser Seite 17 in den beiden gezeigten Stellungen im Wesentlichen dieselbe; lediglich die Orientierung ist unterschiedlich. So ist es möglich, die Stellung des Auflagesattels 12 jeweils vor dem Absetzen des Schneidwerks 16 darauf an die Orientierung anzupassen, in der das Schneidwerk an einen es tragenden Mähdrescher befestigt ist, so dass es beim Aufsetzen auf die Auflagekufen 13 jede von diesen an wenigstens zwei voneinander beabstandeten Punkten berührt und dadurch stabil unterstützt ist. So kann die Verbindung zwischen Schneidwerk und Mähdrescher von jeglichen Kräften entlastet werden, so dass sie leicht lösbar ist, und ein Kippen des Schneidwerks in eine von dem Auflagesattel 12 stabil unterstützte Stellung beim Lösen vom Mähdrescher wird vermieden.

Da die Höhe der am Mähdrescher zu befestigenden Seite 17 des Schneidwerks 16 nicht oder nur wenig von der Stellung des Auflagesattels 12 abhängt, ist auch die Lage des Schwerpunkts des Schneidwerks 16 wenig von der Stellung des Auflagesattels 12 abhängig. Daher kann grundsätzlich in jeder Stellung des Auflagesattels 12 das Schneidwerk 16 sicher befördert werden.

Wenn eine gewisse Abhängigkeit der Höhe der Seite 17 von der Orientierung des Auflagesattels 12 in Kauf genommen werden kann, dann kann das Langloch 8 auch abweichend von der Darstellung der Fig. 1 zur Wagenmitte hin abschüssig sein. Dadurch kommt die momentane Schwenkachse 27 näher am Schwerpunkt 28 des Schneidwerks zu liegen, und die Unabhängigkeit der Straßenlage des Wagens von der Stellung des Auflagesattels 12 ist verbessert.

Wenn das Schneidwerk 16 von dem Wagen durch einen Mähdrescher abgenommen werden soll, dessen Einlasskanal anders orientiert ist als der des Mähdreschers, der zuvor das Schneidwerk auf dem Wagen abgesetzt hat, kann es erforderlich sein, je nach Verhältnis der Orientierungen von Schneidwerk und Einzugskanal beide erst an einem oberen oder unteren Rand der Seite 17 miteinander zu verbinden und das Schneidwerk 16 ein Stück weit anzuheben, so dass es eine Orientierung annimmt, in der es vollständig an dem Einzugskanal befestigt werden kann. Bevorzugt ist allerdings, wenn bereits am Wagen selbst durch Verstellen des Auflagesattels 12 die Orientierung des Schneidwerks 16 an den aufnehmenden Mähdrescher angepasst werden kann. Dies kann zum Beispiel mit Hilfe von Stellgliedern 18 geschehen, die, wie in der Draufsicht der Fig. 2 zu sehen, jeweils zwischen einem Arm 6 und der benachbarten Auflagekufe 13 parallel zum Langloch 8 angeordnet sind und einerseits an dem Arm 6 und andererseits an der Auflagekufe bzw. den fest mit ihr verbundenen Führungszapfen 10 angreifen. Die Stellglieder 18 können von beliebiger bekannter Art sein, zum Beispiel Hydraulikzylinder, eine Gewindestange drehantreibende Elektromotoren oder dergleichen. Es kann auch ein manueller Antrieb der Stellglieder vorgesehen werden. Alternativ können auch an den Führungszapfen 11 angreifende, parallel zu den Langlöchern 9 wirkende Stellglieder 19 vorgesehen werden, wie in Fig. 2 gestrichelt dargestellt. Da sich durch die Verstellung des Auflagesattels 12 die Höhe des Schwerpunkts des darauf ruhenden Schneidwerks nur wenig ändert, erfordert die Verstellung nur eine geringe Antriebskraft

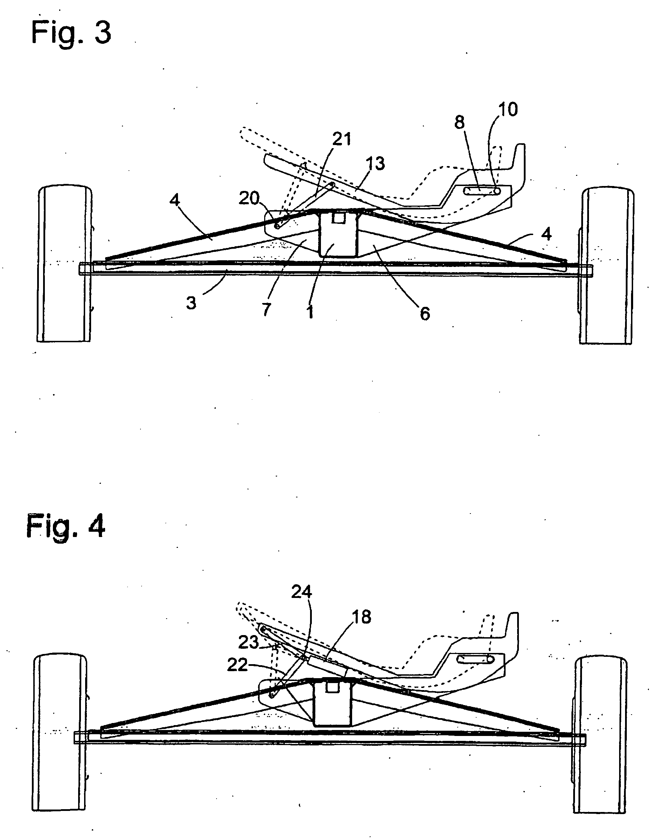

Fig. 3 zeigt eine zweite Ausgestaltung des erfindungsgemäßen Schneidwerkswagens in einer zu Fig. 1 analogen Ansicht, wobei die Kupplung 2 und die Arme 5 der besseren Übersichtlichkeit halber weggelassen sind. Die Arme 6 haben die gleiche Gestalt wie bei der ersten Ausgestaltung; an den Armen 7 ist das Langloch 9 durch ein Gelenk 20 ersetzt, an dem ein Ende eines Kipphebels 21 angreift. Der zur Wagenmitte hin ansteigend orientierte Kipphebel 21 ist an seinem anderen Ende gelenkig mit einer der Auflagekufen 13 des Auflagesattels 12 verbunden. Dieser Aufbau ermöglicht eine Verstellbewegung des Auflagesattels 12 ähnlich derjenigen der ersten Ausgestaltung. Ein Stellglied kann an geeigneter Stelle zwischen dem Fahrgestell und dem Auflagesattel 12 angreifen, aber auch zwischen einerseits dem Kipphebel 21 und andererseits dem Fahrgestell oder dem Auflagesattel.

Bei einer in Fig. 4 gezeigten dritten Ausgestaltung bilden zwei Kipphebel 22, 23, von denen der eine an dem Arm 7 und der andere an die Auflagekufe 13 angelenkt sind und die miteinander in einem Kniegelenk 24 verbunden sind, einen Kniehebel. Ein Stellglied 18 greift einerseits an dem Kniegelenk 24 und andererseits an dem Fahrgestell an. Bei dieser Ausgestaltung genügt ein relativ schwaches Stellglied, um Auflagesattel 12 und Schneidwerk 16 zu verstellen, denn je näher der Auflagesattel 12 der gestrichelt dargestellten Anschlagstellung kommt, umso kleiner wird das Verhältnis der von den Kipphebeln 22, 23 zurückgelegten Drehwinkel zum Verstellweg des Stellgliedes.

### Bezugszeichen

- 1: Längsträger
- 2: Kupplung
- 3: Achse
- 4: Diagonalstreben
- 5: Arm
- 6: Arm
- 7: Arm
- 8: Langloch
- 9: Langloch
- 10: Führungszapfen
- 11: Führungszapfen
- 12: Auflagesattel
- 13: Auflagekufen
- 14: Stange
- 15: Stange
- 16: Schneidwerk
- 17: Seite
- 18: Stellglieder
- 19: Stellglieder
- 20: Gelenk
- 21: Kipphebel
- 22: Kipphebel
- 23: Kipphebel
- 24: Kniegelenk
- 25: Rad
- 26: Zwischenraum
- 27: Schwenkachse
- 28: Schwerpunkt
- 29: Unterkante
- 30: Stützpunkt

## Patentansprüche

1. Schneidwerkswagen zur Beförderung eines Schneidwerks für einen Mähdrescher, mit einem Fahrgestell (1-4) und einem am Fahrgestell (1-4) um eine Schwenkachse schwenkbewegbar geführten Auflagesattel (12), der geformt ist, um ein auf dem Auflagesattel (12) platziertes Schneidwerk (16) stabil zu unterstützen, **dadurch gekennzeichnet, dass** die Schwenkachse oberhalb des Auflagesattels (12) verläuft.

2. Schneidwerkswagen nach Anspruch 1, **dadurch gekennzeichnet, dass** die Entfernung der Schwenkachse (27) vom Schwerpunkt (28) eines auf den Auflagesattels geladenen Schneidwerks kleiner als ein Drittel der Entfernung zwischen der Schwenkachse (27) und einem Auflagepunkt (30) des Schneidwerks auf dem Auflagesattel (12) ist.

3. Schneidwerkswagen nach einem der vorhergehenden Ansprüche, **dadurch gekennzeichnet, dass** der Auflagesattel (12) in sich starr ist.

4. Schneidwerkswagen nach einem der vorhergehenden Ansprüche, **dadurch gekennzeichnet, dass** der Auflagesattel (12) wenigstens zwei in Fahrtrichtung des Wagens beabstandete und durch sich in Fahrrichtung erstreckende Streben (14, 15) verbundene Auflagekufen (13) umfasst.

5. Schneidwerkswagen nach einem der vorhergehenden Ansprüche, **dadurch gekennzeichnet, dass** von Auflagesattel (12) und Fahrgestell (1-4) jeweils eines wenigstens eine Führungskontur (8, 9) und das andere einen entlang der Führungskontur (8, 9) quer zur Fahrtrichtung verschiebbaren Kontaktkörper aufweist.

6. Schneidwerkswagen nach Anspruch 5, **dadurch gekennzeichnet, dass** die Führungskontur (8, 9) ein Langloch (8, 9) und der Kontaktkörper (10, 11) ein in das Langloch eingreifender Bolzen ist.

7. Schneidwerkswagen nach Anspruch 5 oder 6, **gekennzeichnet durch** ein parallel zu der Führungskontur (8, 9) wirkendes, einerseits an dem Fahrgestell (1-4) und andererseits an dem Auflagesattel (12) angreifendes Stellglied (18, 19).

8. Schneidwerkswagen nach Anspruch 5 oder 6, **dadurch gekennzeichnet, dass** der Auflagesattel (12) mittels zweier Führungskonturen (8, 9) und entlang der Führungskonturen (8, 9) verschiebbarer Kontaktkörper (10, 11) geführt ist, wobei eine erste der Führungskonturen (9) zu einer Längsmittelebene des Fahrzeugs abschüssig ist und die zweite Führungskontur (8) sich unter einem kleineren Winkel zur Horizontalen erstreckt als die erste Führungskontur (9).

9. Schneidwerkswagen nach einem der Ansprüche 1 bis 7, **gekennzeichnet durch** wenigstens einen mit dem Auflagesattel (12) und dem Fahrgestell (1-4) gelenkig verbundenen Kipphebel (21).

10. Schneidwerkswagen nach Anspruch 9, **dadurch gekennzeichnet, dass** der Kipphebel (21) zu einer Längsmittelebene des Wagens hin ansteigend orientiert ist.

11. Schneidwerkswagen nach einem der Ansprüche 1 bis 6, **gekennzeichnet durch** wenigstens einen mit dem Auflagesattel (12) und dem Fahrgestell (1-4) gelenkig verbundenen Kniehebel (22-24) und ein am Knie (24) des Kniehebels (22-24) angreifendes Stellglied (18).

## Claims

1. A cutting mechanism truck for conveying a cutting mechanism for a combine harvester, comprising a chassis (1-4) and a support saddle (12) which is guided on the chassis (1-4) pivotably about a pivot axis and which is shaped to stably support a cutting mechanism (16) placed on the support saddle (12), **characterised in that** the pivot axis extends above the support saddle (12).

2. A cutting mechanism truck according to claim 1 **characterised in that** the distance of the pivot axis (27) from the centre of gravity (28) of a cutting mechanism loaded on to the support saddle is less than a third of the distance between the pivot axis (27) and a support point (30) of the cutting mechanism on the support saddle (12).

3. A cutting mechanism truck according to one of the preceding claims **characterised in that** the support saddle (12) is rigid in itself.

4. A cutting mechanism truck according to one of the preceding claims **characterised in that** the support saddle (12) includes at least two support cradles (13) which are spaced in the direction of travel of the truck and which are connected by struts (14, 15) extending in the direction of travel.

5. A cutting mechanism truck according to one of the preceding claims **characterised in that** of the support saddle (12) and the chassis (1-4) a respective one has at least one guide contour (8, 9) and the other has a contact body displaceable along the guide contour (8, 9) transversely to the direction of travel.

6. A cutting mechanism truck according to claim 5 **characterised in that** the guide contour (8, 9) is a slot (8, 9) and the contact body (10, 11) is a pin engaging into the slot.

7. A cutting mechanism truck according to claim 5 or claim 6 **characterised by** a positioning member (18, 19) which is operative parallel to the guide contour (8, 9) and which engages on the one hand the chassis (1-4) and on the other hand the support saddle (12).

8. A cutting mechanism truck according to claim 5 or claim 6 **characterised in that** the support saddle (12) is guided by means of two guide contours (8, 9) and contact bodies (10, 11) displaceable along the guide contours (8, 9), wherein a first of the guide contours (9) is sloping relative to a longitudinal central plane of the vehicle and the second guide contour (8) extends at a smaller angle relative to the horizontal than the first guide contour (9).

9. A cutting mechanism truck according to one of claims 1 to 7 **characterised by** at least one tilt lever (21) hingedly connected to the support saddle (12) and the chassis (1-4).

10. A cutting mechanism truck according to claim 9 **characterised in that** the tilt lever (21) is oriented to rise towards a longitudinal central plane of the truck.

11. A cutting mechanism truck according to one of claims 1 to 6 **characterised by** at least one elbow lever (22-24) hingedly connected to the support saddle (12) and the chassis (1-4) and a positioning member (18) engaging the elbow (24) of the elbow lever (22-24).

## Revendications

1. Chariot de barre de coupe destiné au transport d'une barre de coupe pour une moissonneuse-batteuse, comprenant un châssis (1-4) et une selle de support (12) guidée sur le châssis (1-4) de manière à pouvoir pivoter autour d'un axe de pivotement, qui est formée de manière à soutenir de façon stable une barre de coupe (16) placée sur la selle de support (12), **caractérisé en ce que** l'axe de pivotement s'étend au-dessus de la selle de support (12).

2. Chariot de barre de coupe selon la revendication 1, **caractérisé en ce que** la distance entre l'axe de pivotement (27) et le centre de gravité (28) d'une barre de coupe chargée sur la selle de support est inférieure qu'un tiers à la distance entre l'axe de pivotement (27) et un point d'appui (30) de la barre de coupe sur la selle de support (12).

3. Chariot de barre de coupe selon une des revendications précédentes, **caractérisé en ce que** la selle de support (12) est rigide.

4. Chariot de barre de coupe selon une des revendications précédentes, **caractérisé en ce que** la selle de support (12) comprend au moins deux berceaux de support (13) distants l'un de l'autre dans le sens de la marche du chariot et reliés par des entretoises (14, 15) s'étendant dans le sens de la marche.

5. Chariot de barre de coupe selon une des revendications précédentes, **caractérisé en ce que** la selle de support (12) et le châssis (1-4) comportent à chaque fois l'un(e) au moins un contour de guidage (8, 9) et l'autre un corps de contact mobile transversalement au sens de la marche le long du contour de guidage (8, 9).

6. Chariot de barre de coupe selon la revendication 5, **caractérisé en ce que** le contour de guidage (8, 9) est un trou oblong (8, 9) et le corps de contact (10, 11) un boulon qui s'engage dans le trou oblong.

7. Chariot de barre de coupe selon la revendication 5 ou 6, **caractérisé par** un organe d'actionnement (18, 19) agissant parallèlement au contour de guidage (8, 9), d'un côté sur le châssis (1-4) et de l'autre côté sur la selle de support (12).

8. Chariot de barre de coupe selon la revendication 5 ou 6, **caractérisé en ce que** la selle de support (12) est guidée au moyen de deux contours de guidage (8, 9) et de deux corps de contact (10, 11) mobiles le long des contours de guidage (8, 9), un premier contour de guidage (9) étant incliné par rapport à un plan médian longitudinal du véhicule et le second contour de guidage (8) s'étendant par rapport à l'horizontale suivant un angle inférieur à celui du premier contour de guidage (9).

9. Chariot de barre de coupe selon une des revendications 1 à 7, **caractérisé par** au moins un levier oscillant (21) relié de manière articulée à la selle de support (12) et au châssis (1-4).

10. Chariot de barre de coupe selon la revendication 9, **caractérisé en ce que** le levier oscillant (21) est orienté de manière ascendante vers un plan médian longitudinal du chariot.

11. Chariot de barre de coupe selon une des revendications 1 à 6, **caractérisé par** au moins un levier coudé (22-24) relié de manière articulée à la selle de support (12) et au châssis (1-4) et par un organe d'actionnement (18) agissant sur le coude (24) du levier coudé (22-24).
